# EUROPEAN PATENT SPECIFICATION

(11) **EP 0 718 531 B1**
(45) Date of publication and mention of the grant of the patent: **07.07.1999**
(21) Application number: 95830526.0
(22) Date of filing: 20.12.1995
(51) Int. Cl.: F16K 5/06, F16K 27/06

(54) **Improved ball valve**
Kugelventil
Robinet à tournant sphérique

(30) Priority: 23.12.1994 IT BS940147
(43) Date of publication of application: 26.06.1996
(73) Proprietor: EFFEBI S.p.A., 25060 Polaveno (Brescia) (IT)
(72) Inventor: Bonomi, Gianfranco, I-25065 Lumezzane S.S. (Brescia) (IT)
(74) Representative: Manzoni, Alessandro

(56) References cited:
- EP-A- 0 346 714
- US-A- 3 846 885
- US-A- 4 103 867
- US-A- 4 934 656

## Description

This invention relates to ball valves, especially those intended for use in systems for the distribution of combustible gas and liquids.

Ball valves use as a plug a ball which is drilled diametrically, located between two lateral annular seals, and which can be rotated between an open position and a closed position by means of a leg or stem with a handle.

At the present time, ball valves which are not designed for this purpose, but which are of a general type commonly also used for liquid and gaseous fluids, which are designed having regard only to the maximum pressure and/or temperature characteristics required, are used for the distribution of gas.

However, control of the distribution of combustible gas gives rise to more significant reliability and safety problems than the distribution of liquids or other gaseous fluids. Hence the need to find means which will also ensure more reliable performance from ball valves in the distribution of gas.

In these valves, the ball is most frequently placed coaxially in the valve body, without contact with any part of the body itself, so that the ball is not subject to surface wear, and is connected with a non-rigid link to the control stem, and floats, although to a limited extent, between the lateral seals. These seals can be mounted with a preloading so as to adhere to the surface of the ball. Thanks to the possibility of lateral flotation and the relative elasticity of the seals, the ball can therefore adopt the most appropriate position in order to provide a seal depending on the thrusts and stresses to which it is subjected, especially when the valve is closed. However, wear of the seals or even limited collapse, for example as a result of ageing and/or changes in the operating temperature and/or pressure to which they are subjected, have the result that correct support for the ball from the seals and the seal which they provide against the ball become deficient. Then, as a result of its own weight and/or external stresses, lacking other support, the ball tends to fall and to derive greater support from the lowermost part of the lateral seals. As a result, these are no longer able to provide a necessary and uniform seal against the ball and therefore permit unacceptable escapes, especially when gas is present. However, by increasing the preloading on the seals to limit this disadvantage the level of wear is increased, the freedom of flotation of the ball is reduced, and, in addition to this, the force necessary to manoeuvre the ball is increased, conditions which have an adverse effect on the valve's qualities and performance.

In some types of ball valves the ball acting as a plug is centred, on the side opposite the control stem, on a cylindrical projection forming a part of the valve body housed in a recess formed in that part of the ball. Such an arrangement apparently makes it possible to support the ball to some extent, but deprives it of the freedom of lateral flotation and self-seating between the seals, and increases the friction and wear to which the ball is subjected. This arrangement also implies an increase in the preloading on the seals to assure that a seal on the ball is maintained when operating pressures and/or temperatures vary, with the result that additional thrust members have to be associated with the seals, complicating the construction of the valves and disadvantageously increasing the force required to operate them.

A device according to the preamble of claim 1 is well-known by practise.

The purpose of this invention is to overcome the abovementioned problems with ball valves in a new and original way by creating a point support for the ball in the valve body on its axis of rotation, while at the same time maintaining the ball's ability to float laterally and without affecting the usual arrangement, preloading and method of action of the lateral seals.

This purpose is accomplished by means of an improved ball valve substantially in accordance with claim 1, and which is suitable for interception of the flow of any fluid, but especially gas in gas distribution systems and associated equipment.

The point support for the ball, on its axis of rotation and opposite the control stem, does not bring about any substantial wear on the ball during rotation nor any appreciable increase in the force required to operate the valve, and helps to ease the load of the ball on the seals, thus restricting their action to providing a seal against the surface of the ball.

As the point support for the ball within the body of the valve prevents or at least reduces radial movements of the ball in the plane of the seals, the ball always maintains the same position between the seals and thus ensures a constant and uniform seal over time.

The appended drawings illustrate an example of an embodiment of the ball valve according to this invention, in which:
Figure 1 shows a partial longitudinal cross-section of the improved ball valve, and
Figure 2 shows a transverse section along the arrows II-II in Figure 2.

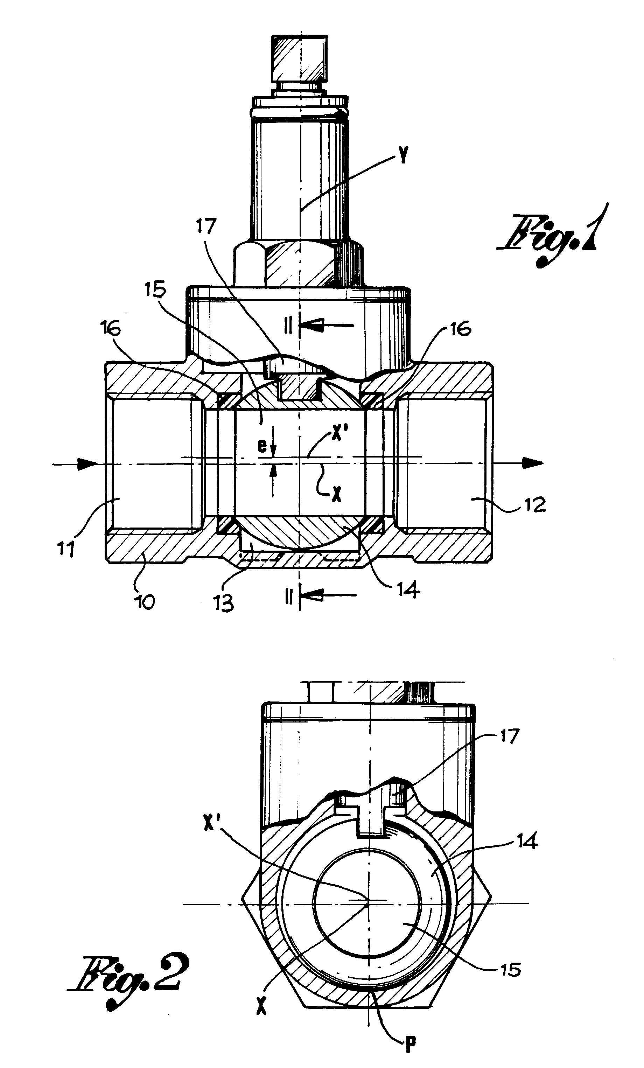

In the said drawings, 10 indicates the body of a ball valve having, in the usual way, an inlet passage 11 and an outlet passage 12 for the fluid being delivered. These passages 11, 12 are coaxial on an axis X and a normally cylindrical housing 13 is provided between them, in which is mounted a ball 14 having a diametral hole 15 along the axis of the said passages 11, 12 acting as a plug for opening and closing the valve. Ball 14 is located between two lateral annular seals 16 mounted in and held in the body of the valve, on opposite sides of said housing 13, coaxially with inlet and outlet passages 11, 12. In order to rotate it, ball 14 is engaged by an operating stem 17 which is radially guided in the valve body and whose axis of rotation Y is perpendicular to the axis of the said passages 11, 12 and hole 15 in ball 14. Side seals 16 can be mounted with the required preloading to adhere to the surface of the sphere and provide a seal for the fluid.

In accordance with the invention, housing 13 for ball 14 is not coaxial with passages 11, 12 and hole 15 of ball 14, but offset with respect to these, which as indicated above are coaxial. Housing 13 is excavated by machining with machine tools, using an appropriate control system, so that its longitudinal axis X' is parallel to the axis X of said passages 11, 12 and said hole 15 in the ball, but displaced from this axis X in the direction of control stem 17, by e, which is predetermined in relation to the dimensions of the ball.

More specifically, the eccentricity e of housing 13 with respect to axis X is such that the inner surface of the housing is in tangential contact with the outer surface of the ball at a point P on the axis Y of rotation stem 17 on the part of the ball opposite the said stem.

This contact point P represents a point of solid support for ball 14 on the valve body which makes it possible for the ball not to bear against lateral seals 16, so as not to incur or give rise to any collapse of the seals and thus achieving the results and advantages mentioned above. The inner surface of the housing may be uniformly cylindrical over its full extent or may have an eccentric area only in one intermediate part thereof in the vicinity of supporting point P. In other words, it is not essential that the housing should have a constant diameter, it is sufficient that it should have an eccentric part in the position and in the manner described above, i.e. in the plane of the access of rotation Y.

The valve described can be operated in different orientations with optimum results in some positions, but spectacular results in other positions, but in any event with more reliability than valves of the known type.

When the valve is operated with the axis X of its body vertical and the axis Y of the operating stem horizontal (as normally occurs when valves are installed on risers) the ball remains perfectly centred with respect to the seals and bears against them concentrically and uniformly in all parts. In this case support P has no effect on but also does not have an adverse effect on the operation of the valve and its sealing capacity.

When the valve is used in the more usual and appropriate position in which the axis X of its body is horizontal and the axis Y of its operating stem is vertical, the ball is supported on eccentric point P of the housing, thus ensuring that the valve also operates correctly under conditions in which the interaction between the ball and the lateral seals is less favourable.

When the valve is used with the axis X of its body and the axis Y of its operating stem both horizontal, if the seals yield slightly, the ball finds support at least on an arc of the eccentric surface of the housing, with the result that it again remains firmly supported within the body without bearing only on the seals.

Finally, given the conditions under which the seals act together with the ball, and have it bearing upon them, they may be constructed of materials and in such a way as to reduce the force required to operate the ball, in addition to the fact that their fitting load may be limited to values which are just sufficient to provide a seal on the ball, thus improving the general performance of the ball valve, with the possibility of reducing difficulties and costs in manufacture and assembly.

## Claims

1. A ball valve of metal or plastic material for liquid and gaseous fluids with a body (10) having
- an inlet passage (11) and an outlet passage (12) for the fluid on one axis (X), and
- a housing (13) lying between the said two passages (11, 12), and in which the said housing is provided,
- a ball (14) having a diametral hole (15) along the axis (X) of the said passages (11, 12), located between two lateral annular seals (16) held in the body of the valve on sides opposite the housing and coaxial with the said passages, and caused to rotate between the open position and a closed position by means of an operating stem (17) having an axis (Y) perpendicular to the axis of the said passages (11, 12) and the said diametral hole in the ball,
characterised in that the said housing (13) is offset with respect to the said axis (X) in such a way as to have a longitudinal axis (X') parallel to the said axis (X) and offset therefrom by e towards the operating stem of the ball by an amount such that the inner surface of the housing is in tangential contact with the outer surface of the ball (14) at a point (P) on the axis (Y) of the said operating stem (17) on the side of the ball opposite the said stem.

2. A ball valve according to claim 1, in which the said contact point (P) between the surface of the housing (13) and the ball (14) represents a solid point of support for the ball within the body of the valve supporting the ball and relieving the seals from the weight of the ball.

3. A ball valve according to claims 1 or 2, in which the said housing is cylindrical with a constant diameter throughout its entire extent.

4. A ball valve according to claims 1 or 2, in which the said housing has an intermediate eccentric zone with a longitudinal axis (X') parallel to and not coinciding with the axis (X) of the coaxial passages (11, 12) and the hole (15) in the ball, though the remaining parts of the housing may be coaxial with the said axis (X), the point of support (P) for the ball lying within the said intermediate zone in the housing.

## Patentansprüche

1. Ein Kugelventil aus Kunststoffmaterial für flüssige und gasartige Flüssigkeiten mit einem mit folgendem versehenen Körper (10):
- einem Eingangsdurchgang (11) und einem Ausgangsdurchgang (12) auf einer Achse (X) sowie
- einem sich zwischen den zwei Durchgängen (11, 12) befindlichen bzw. sitzenden Gehäuse,
- einer Kugel (14) mit einem Durchmesserloch (15) entlang der Achse (X) der obengenannten Durchgänge (11,12).; die Kugel befindet sich zwischen den zwei seitlichen Ringdichtungen (16), die im Ventilkörper an dessen gegenübereinander liegenden Seiten liegen und ist koaxial zu den obengenannten Durchgängen; die Kugel dreht sich mittels eines Betätigungsschafts (17), der mit einer zu den obengenannten Durchgängen (11, 12) vertikal stehenden Achse (Y) versehen ist, von der geöffneten auf die geschlossene Position; in der Kugel befindet sich das obengenannte Diametralloch;
das obengenannte Gehäuse (13) ist auf solche Weise in bezug auf die obengenannte Achse (X) versetzt, daß sich eine seiner Längsachsen (X') parallel zur genannten Achse (X) befindet; diese Längsachse (X) ist gleichzeitig auch von der obengenannten Achse um das Maß "e" in Richtung des Kugelschafts versetzt, wobei die Innenoberfläche des Gehäuses an einem bestimmten Punkt (P) der Achse (Y) des obengenannten Schafts (17) an der dem Schaft gegenüberliegenden Kugelseite in Tangentialkontakt zur externen Oberfläche der Kugel (14) steht

2. Ein Kugelventil entsprechend Anspruch 1, bei dem der obengenannte Kontaktpunkt (P) zwischen der Oberfläche des Gehäuses (13) und der Kugel (14) einem soliden Stützpunkt für die Kugel innerhalb des Ventilskörpers entspricht, welcher die Kugel stützt und die Dichtungen vom Kugelgewicht entlastet.

3. Ein Kugelventil entsprechend Anspruch 1 oder 2, bei dem das obengenannte Gehäuse zylinderförmig und mit einem konstanten Druchmesser entlang der gesamten Erstreckung ist.

4. Ein Kugelventil entsprechend Anspruch 1 oder 2, bei dem das obengenannte Gehäuse eine exzentrische Zone mit einer Längsachse (X') aufweist, welche mit einer Längsachse (X') versehen ist, die parallel zur Achse (X) der koaxialen Durchgänge (11, 12) steht, ohne mit diesen Durchgängen zu übereinstimmen; die Längsachse liegt auch parallel zum in der Kugel befindlichen Loch (15); die übrigen Teile des Gehäuses könnten zur obengenannten Achse (X) koaxial sein, und der Stützpunkt (P) der Kugel befindet sich in der obengenannten Zwischenzone des Gehäuses.

## Revendications

1. Un clapet à bille en métal ou en matériau plastique pour fluides liquides ou gazeux ayant un corps (10) présentant:
- un passage d'amenée (11) et un passage (12) pour le fluide sur un axe (X), et
- un logement (13) situé entre ces deux passages (11, 12); dans ce logement se trouve
- une bille (14) présentant un orifice diamétral (15) le long de l'axe (X) des passages (11, 12), située entre deux joints latéraux en anneau (16) retenus dans le corps de la soupape sur les côtés opposés du logement et coaxiaux avec lesdits passages; elle accomplit une rotation entre la position ouverte et la position fermée par l'action d'une tige de commande (17) dont l'axe (Y) est perpendiculaire à l'axe des passages (11, 12) et de l'orifice diamétral de la bille;
le clapet est caractérisé par le fait que le logement (13) est désaxé par rapport à l'axe (X) de telle sorte qu'il présente un axe longitudinal (X') parallèle à l'axe (X) et écarté par (e) vers la tige de commande de la bille dans une mesure telle que la surface intérieure du logement est en contact tangentiel avec la surface extérieure de la bille (14) en un point (P) sur l'axe (Y) de la tige de commande (17) du côté de la bille opposé à ladite tige.

2. Un clapet à bille correspondant à la revendication 1, dans lequel le point de contact (P) entre la surface du logement (13) et la bille (14) représente un point d'appui solide de la bille à l'intérieur du corps du clapet pour soutenir la bille et réduire la pression du corps de la bille sur les joints.

3. Un clapet à bille correspondant aux revendications 1 ou 2, dans lequel le logement est cylindrique, présentant un diamètre constant sur toute son extension.

4. Un clapet à bille correspondant aux revendications 1 ou 2, dans lequel le logement présente une zone intermédiaire excentrique avec un axe longitudinal (X') parallèle et non coïncidant avec l'axe (X) des passages coaxiaux (11, 12) et de l'orifice (15) de la bille; les autres parties du logement pouvant cependant être coaxiales avec l'axe (X), et le point d'appui (P) de la bille se trouvant à l'intérieur de la zone intermédiaire du logement.
